# EUROPÄISCHE PATENTSCHRIFT

(11) **EP 0 392 269 B1**
(45) Veröffentlichungstag und Bekanntmachung des Hinweises auf die Patenterteilung: **03.03.1993**
(21) Anmeldenummer: 90105984.0
(22) Anmeldetag: 29.03.1990
(51) Int. Cl.: A61C 19/04

(54) **Verfahren und Vorrichtung zur Überprüfung oder Vermessung eines zahnärztlichen Abdruckes oder Modell eines Gebisses**
Device and method for controlling or measuring a dental impression or dental model
Dispositif et méthode pour mesurer et contrôler une empreinte dentaire ou le modèle d'un dentier

(30) Priorität: 08.04.1989 DE 3911568
(43) Veröffentlichungstag der Anmeldung: 17.10.1990
(73) Patentinhaber: Krupp Medizintechnik GmbH, 45021 Essen (DE)
(72) Erfinder: Eenboom, Algund, Dr., D-2950 Leer (DE); Pollock, Benedikt, Dipl.-Ing., D-4712 Werne (DE); Lindigkeit, Jürgen, Dr., D-4690 Herne 1 (DE)
(74) Vertreter: Vomberg, Friedhelm, Dipl.-Phys.

(56) Entgegenhaltungen:
- EP-A- 0 033 492
- EP-A- 0 269 354
- DE-A- 2 719 696
- DE-C- 1 000 961
- US-A- 3 715 165
- Meyers Lexikon der Technik..., Ausgabe 1970, Seite 1746, Abb.9

## Beschreibung

Die Erfindung betrifft ein Verfahren und eine Vorrichtung zur Überprüfung oder Vermessung eines zahnärztlichen Abdruckes oder Modells eines Gebisses nach dem Oberbegriff der Ansprüche 1 und 4.

Prothesenteile, wie Brücken oder Kronen, erfordern ein genaues Abschleifen von Zähnen zu konischen Zahnstümpfen ohne Hinterschnitte. Darüber hinaus muß bei einer Zahnstumpfreihe, auf die eine Brücke aufgebracht werden soll, zusätzlich darauf geachtet werden, daß die im wesentlichen durch die Zahnlängsachse vorgegebene Einschubrichtung eines jeden Brückengliedes mit der des benachbarten Brückengliedes übereinstimmt. Eine Kontrolle, ob die Zahnstümpfe frei von Hinterschnitten sind bzw. eine gleiche Einschubrichtung für eine Brücke bieten, wurde bisher durch Betrachten eines gefertigten (positiven) Abdruckes mit bloßem Auge durchgeführt. Zur Feststellung einer gemeinsamen Einschubrichtung ist auch schon vorgeschlagen worden, an dem Abdruckmodell jeden einzelnen Zahnstumpf mit einem vertikal gestellten Tastfinger zu umfahren, um etwaige Abweichungen registrieren zu können. Abgesehen von dem hohen Aufwand, den dieses Verfahren erfordert, mangelt es nach wie vor an der geforderten Genauigkeit, so daß vielfach Nacharbeiten am Patienten - erneutes Nachschleifen der Zahnstümpfe - erforderlich waren, bevor diese als ausreichende Basis zur Aufnahme von Prothesenteilen dienen konnten.

Darüber hinaus ist es häufig erforderlich, festzustellen, ob bei der Behandlung von Zahnfehlstellungen der nach dem Richten der Zähne benötigte Platz überhaupt vorhanden ist. Bisher werden Kiefermodelle mit Schieblehren vermessen und die benötigten Werte bzw. Meßdifferenzen anschließend berechnet.

Bekannt sind auch digitale Schieblehren, die an einem Personal Computer (PC) mit entsprechendem Programm angeschlossen sind. Diese Meßmethode ist aber ungenau, darüber hinaus lassen sich auch keine Zahnbögen vermessen. Die Zahnbögen werden derzeit durch Anlegen eines Drahtes an die Zähne und durch anschließendes Vermessen der gestreckten Länge dieses Drahtes bestimmt.

Um die in der Zahnheilkunde benötigten Abgußmodelle in beliebigen ebenen Koordinationsystemen in unterschiedlichen Tiefen bestimmen zu können, wird in der DE 27 19 696 vorgeschlagen, ein aus einer Strahlaufweitungsoptik tretendes paralleles Lichtstrahlbündel durch ein Meßraster mit vernachlässigbarer oder ohne Verzeichnung auf Teile oder die gesamte Oberfläche des Körpers zu projizieren und danach das projizierte Meßraster zu fotografieren und auszuwerten oder das Meßraster auf der Körperoberfläche direkt auszuwerten. Als Lichtquelle wird ggf. ein Laser eingesetzt, dessen Strahlung aufzuweiten ist. Abgesehen davon, daß mit dem genannten Verfahren bzw. einer entsprechend aufgebauten Vorrichtung die Überprüfung eines Abdruckes auf hinterschnittene Zahn- bzw. Zahnstumpfflächen nicht möglich ist, da hierbei das Meßraster hinderlich ist, ist auch die Abstandsmessung mit einem durch die Rasterfeinheit bestimmten Fehler begrenzt. Die Vorrichtung setzt weiterhin parallele Lichtstrahlen voraus, die senkrecht auf das Meßraster bzw. auf das Objekt fallen. Etwaige Parallelitäts- und Richtungsabweichungen führen zu Verzerrungen und Verzeichnungen, die das Meßergebnis weiterhin verschlechtern.

Es ist daher Aufgabe der vorliegenden Erfindung, ein Verfahren und eine Vorrichtung zur Überprüfung oder Vermessung von zahnärztlichen Abdrucken bzw. Modellen auf Hinterschnitte zu schaffen, mit dem ohne großen verfahrenstechnischen wie apparativen Aufwand das exakte Abschleifen der Zahnstümpfe kontrollierbar ist bzw. Längen oder Abstände vermessen werden können. Das Verfahren und die Vorrichtung sollen insbesondere leicht bedienbar sein.

Diese Aufgabe wird durch die in den Ansprüchen 1 und 4 gekennzeichneten Merkmale gelöst. Weiterbildungen der Erfindung sind in den Unteransprüchen 2, 3 und 5 bis 16 beschrieben.

Das erfindungsgemäße Verfahren bzw. die erfindungsgemäße Vorrichtung beruht darauf, daß ein Lichtstrahlenbündel auf einer zur Ausbreitungsrichtung des Lichtes schrägen Fläche einen "Lichtpunkt" mit einer elliptischen Form erzeugt. Bei Flächen mit gleicher Neigung sind die betreffenden Lichtpunktellipsen - gleicher Abstand der Lichtquelle von der Fläche vorausgesetzt - gleich groß. Fährt man mit dem Lichtstrahlenbündel den Zahnstumpf ab, so führen Hinterschneidungen zu einer sofort und deutlich erkennbaren Schattenbildung. Darüber hinaus zeigen ungleich gestaltete Lichtpunkte an nebeneinanderliegenden Zahnstümpfen auch etwa vorhandene Divergenzen der erzielten Einschubrichtung der Prothesenteile an. Der Zahnarzt und/oder die Zahnarzthelferin kann somit nach Abnahme eines Gebißabdruckes und Fertigstellung eines Modelles unmittelbar feststellen, ob ein Nachschleifen des Zahnstumpfes bzw. der Zahnstümpfe erforderlich ist. Vorteilhafterweise ist hierbei der apparative Aufwand auf ein Minimum beschränkt. Desgleichen werden Abstände von Zähnen und Längen in einfacher Weise dadurch bestimmt, daß der vom Lichtstrahlenbündel überstrichene Weg ermittelt wird.

Vorzugsweise soll als Lichtquelle ein Laser, insbesondere Helium-Neon-Laser, verwendet werden.

Um Abweichungen von Flächenneigungen an den Zahnstümpfen feststellen zu können, wird nach einer Weiterbildung der Erfindung ein mit einem Maßstab ausgestattetes Raster durchstrahlt. Unterschiedlich große Abbildungspunkte lassen somit Rückschlüsse auf die Art der erforderlichen Nachbearbeitung der Zahnstümpfe zu.

Die erfindungsgemäße Vorrichtung ist einfach aufgebaut und weist die in Anspruch 4 augegebenen Merkmale auf.

Vorzugsweise wird als Lichtquelle ein Laser, insbesondere ein Helium-Neon-Laser verwendet, der den Vorteil einer extrem starken Lichtstrahlenbündelung aufweist. Bei Verwendung einer anderen Lichtquelle wird das Lichtstrahlenbündel durch Verwendung von Blenden auf den Durchmesser von maximal 0,6 mm beschränkt. Nach einer Weiterbildung der Erfindung sind der Auflage- und Aufspanntisch und die Lichtquelle an ein und demselben Rahmen befestigt, so daß der optimale Abstand zwischen Lichtquelle und Aufspanntisch bzw. Gebißabdruck apparativ optimiert vorgebbar ist. Der Rahmen besteht vorzugsweise aus einem Untergestell mit einer Aufstellfläche für den Auflage- und Aufspanntisch, einer sich an die Aufstellfläche randseitig anschließenden und vertikal angeordneten Säule und einem daran höhenverstellbar aber lokal arretierbaren Auslegerarm, an dessen freiem Ende die Lichtquelle befestigt ist.

Um das Lichtstrahlenbündel verfahren zu können, weist zum einen die Säule am unteren Ende einen zylindrischen Zapfen auf, der in einer entsprechenden Sackbohrung des Untergestells eingesteckt ist - d.h. die Säule ist um ihre Längsachse drehbar ausgebildet - zum anderen ist der Auslegerarm mehrgelenkig und besitzt ein Gelenk, das Auslegerarmschwenkungen um eine vertikale Achse zuläßt. Alternativ und nach einer weiteren Ausgestaltung der Erfindung ist es möglich, den Auslegerarm teleskopartig auszugestalten.

Um die Horizontallage des Gebißabdruckes einstellen zu können, ist der Auflage- und Aufspanntisch über ein feststellbares Kugelgelenk mit dem Untergestell verbunden.

Als weitere visuelle Hilfe ist am freien Auslegerende eine vorzugsweise schwenkbare Lupe angeordnet, die weiterhin mit einer blendfreien Lampe ausgestattet sein kann.

Nach einer weiteren Ausgestaltung der Erfindung ist unterhalb der Lichtquelle - ggf. in Form einer Blende - ein Raster, vorzugsweise ein Millimeterrasterangeordnet. Dieses gestattet Längenmessungen des Lichtauftreffpunktes am Zahnabdruck.

Nach einer Weiterentwicklung wird zum Aufspannen des Modelles ein Kreuztisch verwendet, der mit Wegaufnehmern für die x- und y-Achse versehen ist, wobei die Wegaufnehmer mit einem PC verbunden sind. Damit läßt sich mittels eines entsprechenden Software-Programms ein Gebißmodell hinsichtlich der Zahnbreiten, Zahnabstände und/oder Zahnbogenlängen exakter vermessen und berechnen.

Durch einen um 90° klappbaren Kreuztisch, der ein entsprechendes Umklappen des Modelles ermöglicht, lassen sich auch Längen bzw. Abstände in der z-Achse ermitteln, so daß Zahnhöhen vermessen werden können oder durch Aufsetzen des Unterkiefer- oder Oberkiefermodelles auch der Über- oder Unterbiß feststellbar sind.

Nach Ermittlung der Zahnbreiten, Längen und/oder Abstände kann der PC die Meßdifferenzen errechnen und somit dem Behandler eine Behandlungsunterlage geben, die insbesondere über einen Drucker ausgedruckt werden kann.

Ein Ausführungsbeispiel der Erfindung ist in der Zeichnung dargestellt. Es zeigen:

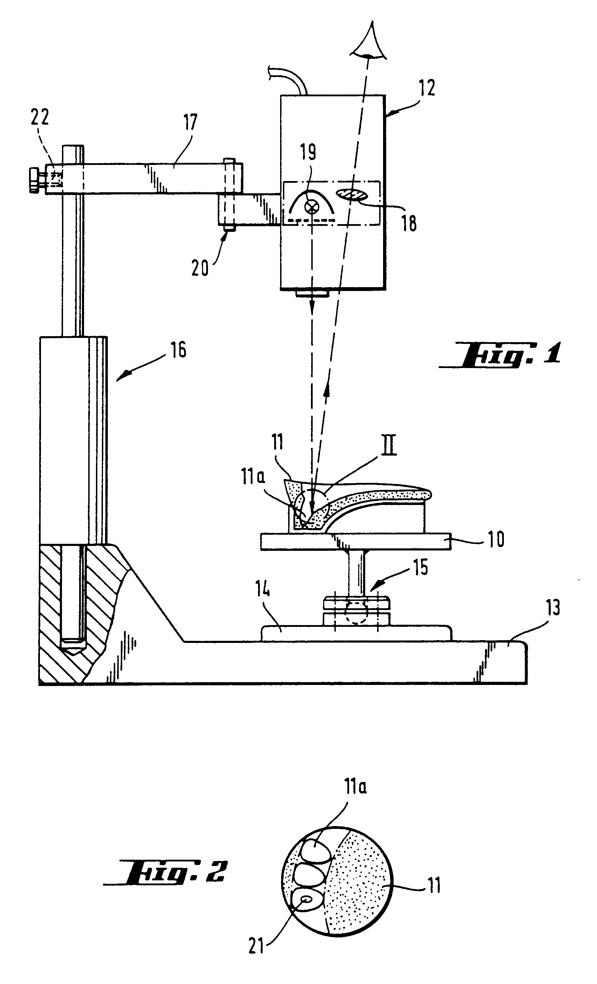

Fig. 1 eine schematische Seitenansicht des erfindungsgemäßen Abdrucküberprüfungsgerätes und
Fig. 2 einen Ausschnitt mit der vom Lichtbündel bestrahlten Fläche am Zahnabdruck.

Die erfindungsgemäße Vorrichtung besteht im wesentlichen aus einem Auflage- und Aufspanntisch 10 für einen Gebißabdruck 11, oberhalb dessen ein Laser 12 angeordnet ist, dessen Lichtstrahlen in vertikaler Richtung verlaufen. Der Laser 12 ist an dem freien Ende eines Auslegerarmes 17 befestigt, der höhenverstellbar an einer vertikalen zylindrischen Säule 16 arretierbar ist. Als Arretierungsmittel dient im einfachsten Fall eine Feststellschraube 22. Die Säule 16 ist randseitig eines Untergestelles 13 und mit ihr verbunden angeordnet, wobei das Untergestell 13 eine Aufstellfläche 14 aufnimmt, die über ein Kugelgelenk 15 den Auflage- und Aufspanntisch aufnimmt. Zusätzlich ist am Ende des Auslegerarmes - hier an dem Laser 12 - eine Lupe 18 vorgesehen, die mit einer blendfreien Lampe 19 ausgestattet ist.

Der Auslegerarm 17 ist zweiteilig aufgebaut, wobei dessen beiden Teile über ein Gelenk 20 miteinander verbunden sind. Dieses Gelenk 20 besteht aus einem Drehzapfen, der in entsprechend ausgebildeten Bohrungen der Auslegerarmteile gesteckt ist. Hiermit sind Schwenkungen des Lasers 12 in der horizontalen Ebene möglich; berücksichtigt man zudem, daß der mit der Säule 16 verbundene Auslegerteil ebenfalls in der Horizontalen schwenkbar ist, so läßt sich der Laser 12 in jede gewünschte Lage oberhalb des Abdruckes 11 bewegen. Alternativ ist es möglich, die Säule 16 um ihre Längsachse drehbar auszubilden etwa durch im Prinzip nach dem Stand der Technik bekannte Zapfenaufnahme in einer Sacklochbohrung des Untergestelles 13.

Ebenfalls im Sinne der Erfindung ist es möglich, den Laser 12 an einem ausziehbaren Parallelogrammscherenteil endseitig zu befestigen, etwa dergestalt, wie dies bei Telefonhaltern bekannt ist.

Die erfindungsgemäße Vorrichtung arbeitet folgendermaßen:
Der Laser 12 wird oberhalb des Abdruckes 11 so ausgerichtet, daß auf einen Zahnstumpf 11a ein Lichtpunkt 21 projiziert wird. Durch Betrachtung der Kontur dieses Lichtpunktes 21 können ohne weitere Hilfsmittel Rückschlüsse auf die Form des Zahnes bzw. Zahnstumpfes gezogen werden. Verschwenkt man anschließend den Laser 12 ohne Abstandsänderung zum Gebißabdruck 11 derart, daß der Lichtpunkt 21 auf einen benachbarten Zahn bzw. Zahnstumpf gerichtet ist, so kann durch Vergleich des nunmehr entstehenden Lichtpunktes 21 festgestellt werden, ob die nebeneinanderliegenden Stümpfe eine gleiche Einschubrichtung aufweisen. Zudem ist bei jedem einzelnen Zahnstumpf leicht feststellbar, ob Hinterschnitte vorhanden sind.

In der Regel ist die erfindungsgemäße Vorrichtung nach einmaliger Justage für alle Abdrücke verwendbar. Falls erforderlich, kann der Gebißabdruck 11 durch Änderung der Lage des Auflage- und Aufspanntisches 10 über das Gelenk 15 in die gewünschte Ebene gebracht werden. In gleichem Maße ist es möglich, durch Lösen der Feststellschraube 22 und Herauf- oder Herabfahren des Auslegerarmes 17 den Abstand des Lasers 12 zum Gebißabdruck 11 zu verändern bzw. zu optimieren.

Der Auflage- und Aufspanntisch 10 kann jedoch auch als Kreuztisch ausgebildet sein, wobei der Laser 12 über dessen Mitte fixiert ist. Das Gipsmodell wird auf dem Kreuztisch befestigt. Verfährt man den Lichtpunkt 21 entlang der zu vermessenden Abstände bzw. Längen, so kann der Weg, den der Kreuztisch hierbei zurücklegt, über einen mit Wegaufnehmern verbundenen PC ermittelt, gespeichert und ggf. ausgedruckt werden. Der bei Verwendung eines Lasers im Durchmesser relativ kleine Lichtpunkt ist auf den meist weißen Gipsmodellen sehr gut zu erkennen und läßt sich von dem z.B. von Hand verschiebbaren Kreuztisch sehr gut positionieren. Ein Meßfehler, wie er bei der Verwendung von Schieblehren häufig auftritt, ist praktisch ausgeschlossen.

## Patentansprüche

1. Verfahren zur Überprüfung eines zahnärztlichen Abdruckes order Modells eines Gebisses auf hinterschnittene Zahn- bzw. Zahnstumpfflächen und/oder gleiche Einschubrichtungen für Brückenglieder und/oder zur Vermessung von Zahnbreiten, Zahnabständen oder Zahnbogenlängen,
**dadurch gekennzeichnet**,
daß jeder Zahn bzw. Zahnstumpf des Abdruckes bzw. Modells mit einen im Querschnitt maximal 0,6 mm großen kreisförmigen Lichtstrahlenbündel mit einer im wesentlichen zur Abdruckebene senkrechten Strahlrichtung beleuchtet wird und jede Breite oder Länge oder jeder Abstand durch Vermessung des von dem Lichtstrahlenbündel überstrichenen Weges ermittelt wird.

2. Verfahren nach Anspruch 1, dadurch gekennzeichnet, daß der Abdruck mit einem Laser (12), vorzugsweise He-Ne-Laser, bestrahlt wird.

3. Verfahren nach Anspruch 1 oder 2, dadurch gekennzeichnet, daß das Lichtstrahlenbündel ein mit einem Maßstab ausgestattetes Raster durchstrahlt.

4. Vorrichtung zur Überprüfung eines zahnärztlichen Abdruckes oder Modells eines Gebisses auf hinterschnittene Zahn- bzw. Zahnstumpfflächen und/oder gleiche Einschubrichtungen für Brückenteile und/oder zur Vermessung von Zahnbreiten, Zahnabständen oder Zahnbogenlängen,
**dadurch gekennzeichnet**,
daß oberhalb eines Auflage- und Aufspanntisches (10) für den Abdruck (11) oder das Modell eines Gebisses eine Lichtquelle (12) so verschiebbar angeordnet ist, daß deren im Querschnitt maximal 0,6 mm großes kreisförmiges Lichtstrahlenbündel mit im wesentlichen vertikaler Strahlrichtung auf jeden Bereich des Abdruckes (11) richtbar ist.

5. Vorrichtung nach Anspruch 4, dadurch gekennzeichnet, daß die Lichtquelle ein Laser (12), vorzugsweise ein He-Ne-Laser, ist.

6. Vorrichtung nach Anspruch 4 oder 5, dadurch gekennzeichnet, daß der Auflage- und Aufspanntisch (10) und die Lichtquelle (12) an ein und demselben Rahmen (13 bis 17) befestigt sind.

7. Vorrichtung nach Anspruch 4, dadurch gekennzeichnet, daß der Rahmen aus einem Untergestell (13) mit einer Aufstellfläche (14) für den Auflage- und Aufspanntisch (10), einer sich an die Aufstellfläche (13) randseitig anschließenden und vertikal angeordneten Säule (16) und einem daran höhenverstellbar aber lokal arretierbaren Auslegerarm (17) besteht, an dessen freiem Ende die Lichtquelle (12) befestigt ist.

8. Vorrichtung nach Anspruch 7, dadurch gekennzeichnet, daß die Säule (16) am unteren Ende einen zylindrischen Zapfen aufweist, der in einer entsprechenden Sackbohrung des Untergestelles (13) eingesteckt ist.

9. Vorrichtung nach einem der Ansprüche 4 bis 8, dadurch gekennzeichnet, daß der Auflage- und Aufspanntisch (10) über ein feststellbares Kugelgelenk (15) mit dem Untergestell (13) verbunden ist.

10. Vorrichtung nach einem der Ansprüche 4 bis 9, dadurch gekennzeichnet, daß am freien Auslegerarmende (17) eine vorzugsweise schwenkbare Lupe (18) angeordnet ist.

11. Vorrichtung nach Anspruch 10, dadurch gekennzeichnet, daß die Lupe (18) mit einer blendfreien Lampe (19) ausgestattet ist.

12. Vorrichtung nach einem der Ansprüche 7 bis 11, dadurch gekennzeichnet, daß der Auslegerarm (17) mehrgelenkig ist und mindestens ein um eine vertikale Achse schwenkbares Gelenk (20) aufweist.

13. Vorrichtung nach einem der Ansprüche 4 bis 12, dadurch gekennzeichnet, daß unterhalb der Lichtquelle (12) ein Raster, vorzugsweise Millimeterraster, angeordnet ist.

14. Vorrichtung nach einem der Ansprnche 4 bis 13, dadurch gekennzeichnet, daß der Auflage- und Aufspanntisch (10) ein Kreuztisch ist, der mit Wegaufnehmern für die Registrierung von Bewegungen in der x- und y-Achse (horizontalen Ebene) versehen ist.

15. Vorrichtung nach Anspruch 14, dadurch gekennzeichnet, daß der Kreuztisch um 90° kippbar und mit Wegaufnehmern für Bewegungen in der x-z- bzw. y-z-Ebene versehen ist.

16. Vorrichtung nach Anspruch 14 oder 15, dadurch gekennzeichnet, daß die Wegaufnehmer mit einem Rechner, vorzugsweise einem mit Drucker und/oder Plotter gekoppelten PC verbunden sind.

## Claims

1. A method of examining a dental impression or model of a denture for undercut tooth or tooth stump surfaces and/or identical directions of insertion for bridge members and/or for the measuring of tooth widths, tooth spacing or tooth arch lengths, characterized in that each tooth or tooth stump of the impression or model is illuminated with a circular beam of light having a maximum cross-section of 0.6 mm and a direction substantially perpendicular to the plane of the impression, and each width, length or spacing is determined by measuring the path over which the beam of light passes.

2. A method according to claim 1, characterized in that the impression is irradiated with a laser (12), preferably an He-Ne laser.

3. A method according to claims 1 or 2, characterized in that the beam of light passes through a graduated grid.

4. An apparatus for examining a dental impression or model of a denture for undercut tooth or tooth stump surfaces and/or identical directions of insertion for bridge members and/or for the measuring of tooth widths, tooth spacing or tooth arch lengths, characterized in that a light source (12) is disposed displaceably above a supporting and clamping table (10) for the impression (11) or model of a denture that its circular beam having a maximum cross-section of 0.6 mm can be directed substantially vertically at each zone of the impression (11).

5. An apparatus according to claim 4, characterized in that the light source is a laser (12), preferably an He-Ne laser.

6. An apparatus according to claims 4 or 5, characterized in that the supporting and clamping table (10) and the light source (12) are attached to the same frame (13 to 17)

7. An apparatus according to claim 4, characterized in that the frame comprises an underframe (13) having a base surface (14) for the supporting and clamping table (10), a vertical column (16) adjoining the member (13) at its edge, and a jib (17) which can be vertically adjustable on said column but can be locally locked and to whose free end the light source (12) is attached.

8. An apparatus according to claim 7, characterized in that the column (16) has at its lower end a cylindrical pin which is inserted in a corresponding blind bore in the underframe (13).

9. An apparatus according to one of claims 4 to 8, characterized in that the supporting and clamping table (10) is connected to the underframe (13) via a lockable ball-and-socket joint (15).

10. An apparatus according to one of claims 4 to 9, characterized in that a preferably pivotable magnifying lens (18) is disposed on the free end (17) of the jib.

11. An apparatus according to claim 10, characterized in that the magnifying lens (18) is equipped with an antidazzle lamp (19).

12. An apparatus according to one of claims 7 to 11, characterized in that the jib (17) is multi-jointed and has at least one joint (20) pivotable around a vertical axis.

13. An apparatus according to one of claims 4 to 12, characterized in that a grid, preferably a millimetre grid, is disposed below the light source (12).

14. An apparatus according to one of claims 4 to 13, characterized in that the supporting and clamping table (10) is a cross-table having displacement transducers for the recording of movements in the x and y axes (horizontal plane).

15. An apparatus according to claim 14, characterized in that the cross-table can be tilted by 90° and has displacement transducers for movements in the x-z and y-z planes respectively.

16. An apparatus according to claims 14 or 15, characterized in that the displacement transducers are connected to a computer, preferably a personal computer (PC) coupled to a printer and/or plotter.

## Revendications

1. Procédé pour contrôler et mesurer une empreinte dentaire ou un modèle dentaire d'une mâchoire pour détecter les dents ou les chicots détalonnés et/ou des directions d'insertion identiques pour des éléments de bridges et/olj pour mesurer la largeur des dents, leur espacement ou la longeur de les arcs dentaires, caractérisé en ce qu'on éclaire chaque dent, chicot ou modèle avec un grand faisceau lumineux circulaire dont la section ne dépasse pas 0,6mm dans une direction perpendiculaire au plan de l'empreinte et on détermine chaque largeur, chque longueur ou chaque espacement en mesurant le trajet balayé par chaque faisceau de rayons lumineux.

2. Procédé selon la revendication 1, caractérisé en ce qu'on éclaire l'empreinte avec unlaser (12), de préférence, avec un laser HE-Ne.

3. Procédé selon la revendication 1 ou 2, caractérisé en ce quele faisceau de rayons lumineux traverse un réseau coté.

4. Dispositif pour contrôler une empreinte ou un modèle dentaire afin de rechercher les dents détalonnées et/ou des directions d'insertion identiques pour des éléments de bridges et/ou pour mesurer la largeur des dents, leurs espacement ou la longueur des arcs dentaires, caractérisé en ce que, au-dessus d'un plateau de montage et de support (10) pour l'empreinte (11) le modèle d'une mâchoire est montée une source lumineuse coulissante (12) de façon que son faisceau lumineux circulaire, ayant une section maximale de 0,6mm, peut être dirigé pratiquement à la verticale sur toutes les regions de l'empreeinte (11).

5. Dispositif selon la revendication 4, caractérisé n ce que la source lumineuse est un laser (12) de préférence, un laser He-Ne-La.

6. Dispositif selon la revendication 4 ou 5, cractérisé en ce que la table de support et de montage (10) et la source lumineuse (12) sont fixées sur un seul et même châssis 13 à 17).

7. Dispositif selon la revendication 4, cractérisé en ce que le châssis comprend un plateau inférieur (13) comportant une surface de support (14) pour le plateau de support et de montage 10, une colonne verticale (16) se raccordant au bord de la surface de support (14) et comportnt un bras en porte-à-faux (17) réglable en hauteur à l'extrémité libre duquel est fixée une source lumineuse (12).

8. Dispositif selon la revendcation 7, caractérisée en c que la colonne (16) comporte, à son extrémité inférieure, un tourillon cylindrique quis'engage dans un trou borgne de forme correspondante du plateau inférieur (13).

9. Dispositif selon l'une quelconque ds revendications 4 à 8, caractérisé en ce que la table de support et de montage (10) est reiée par un joint à rotule (15) pouvant être bloqué, au plateau (13).

10. Dispositif selon l'une quelconque ds revendications 4 à 9, caractérisé en ce que, à l'extrémité libre (17) du bras en porte-à-faux (17) est fixée une loupe (18).

11. Dispositif selon 1 revendication 10, caractérisé en ce que la loupe (18) est équipée d'une lampe (10) non éblouissante.

12. Dsipositif selon l'une quelconque des revendications 7 à 11, caractérisé en ce que le bras en porte-à-faux (17) comprend plusieurs articulations et, au moins, unearticulation (20) pouvant pivoter autour d'un axe vertical.

13. Dispositif selon l'une des revendications 4 à 12, caractérisé en ce que sous la source lumineuse (12) est monté un réseau, millimétrique, de préférence.

14. Dispositif selon l'une quelconque des revendications 4 à 13, caractérisé en ce que le plateau de support et de montage (10) est une table en croix pourvu de capteurs de trajet enregistrant les déplacements suivant les axes X et Y (dans le plan horizontal).

15. Dispositif selon 1 revendication 14, caractérisé en ce que la table en croix peut basculer de 90° et compmorte des caapteurs de trajet pour les mouvements dans ls plans X-Z et Y-Z.

16. Dispositif selon la revendication 14 ou 15, caractérisé en ce que les capteurs de trajet sont reliés à une calculatrice, comportant, de préférence, à un ordinateur couplé à une imprimante et/ou à une table traçante.
